(19) Europäisches Patentamt
European Patent Office
Office européen des brevets

(11) Numéro de publication : **0 219 381**
**B1**

(12) # FASCICULE DE BREVET EUROPÉEN

(45) Date de publication du fascicule du brevet : **21.12.88**

(51) Int. Cl.[4] : **C 01 F 7/60**

(21) Numéro de dépôt : **86401954.2**

(22) Date de dépôt : **05.09.86**

(54) **Procédé de préparation de chlorure d'aluminium par carbochloration de matières alumineuses.**

(30) Priorité : **13.09.85 FR 8513610**

(43) Date de publication de la demande :
**22.04.87 Bulletin 87/17**

(45) Mention de la délivrance du brevet :
**21.12.88 Bulletin 88/51**

(84) Etats contractants désignés :
**AT BE CH DE FR GB IT LI LU NL SE**

(56) Documents cités :
**FR-A- 1 144 268**
**US-A- 2 835 554**
**US-E- 21 265**
**CHEMICAL ABSTRACTS, vol. 96, no. 18, mai 1982, page 156, résumé no. 145375t, Columbus, Ohio, US; N.A. BAITENEV et al.: "Chlorination of mineral wastes from coals of the Ekibastuz field"**

(73) Titulaire : **ATOCHEM**
**4 & 8, Cours Michelet La Défense 10**
**F-92800 Puteaux (FR)**

(72) Inventeur : **Pillet, Daniel**
**10 rue Capitaine Poiteau**
**F-38100 Grenoble (FR)**

(74) Mandataire : **Rochet, Michel et al**
**ATOCHEM Département Propriété Industrielle La Défense 10 4 & 8 Cours Michelet**
**F-92800 Puteaux (FR)**

**EP 0 219 381 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un procédé de préparation de chlorure d'aluminium par carbochloration d'une matière alumineuse au moyen d'une matière carbonée et d'une composition gazeuse à base de chlore.

Le procédé de préparation traditionnel de chlorure d'aluminium consiste à faire réagir du chlore gazeux sur de l'aluminium. Ce procédé est toutefois onéreux en raison du coût élevé de l'aluminium, métal dont la fabrication nécessite une forte consommation d'énergie électrique.

D'autres procédés, dits de carbochloration, consistent à faire réagir du chlore et du carbone, ou un agent de carbochloration susceptible de libérer du chlore et de l'oxyde de carbone tel que, par exemple, le phosgène, sur une matière alumineuse.

Les équations chimiques suivantes expriment les principales réactions susceptibles de se produire entre la matière alumineuse, le carbone, le chlore et le phosgène utilisé en tant qu'agent de chloration :

$$2\ Al_2O_3 + 3\ C + 6\ Cl_2 \longrightarrow 4\ AlCl_3 + 3\ CO_2$$

$$Al_2O_3 + 3\ C + 3\ Cl_2 \longrightarrow 2\ AlCl_3 + 3\ CO$$

$$Al_2O_3 + 3\ COCl_2 \longrightarrow 2\ AlCl_3 + 3\ CO_2$$

Il est connu par le certificat d'utilité français n° 74 32698, publié sous le numéro 2 272 038, de préparer du chlorure d'aluminium par carbochloration selon une technique qui consiste à fragmenter séparément ou ensemble une matière alumineuse et une matière carbonée, à former un mélange intime desdites matières, à amener le mélange sous forme de briquettes par compactage, à le calciner, puis à le soumettre à une opération de chloration au moyen d'un courant gazeux contenant du chlore. Cependant le compactage nécessite des pressions élevées pouvant atteindre 15 t/cm$^2$. De plus la réactivité des briquettes est faible, ce qui se traduit par un faible rendement en chlore R de l'opération de chloration défini par :

$$R = \left(1 - \frac{\text{Quantité de chlore (libre ou combiné sous forme d'acide chlorhydrique ou de phosgène) présent dans les gaz après chloration}}{\text{quantité de chlore mis en oeuvre}}\right) \times 100$$

Il est également connu par le certificat d'utilité français n° 74 32698, publié sous le numéro 2 272 038, de préparer du chlorure d'aluminium par carbochloration selon une technique qui consiste à fragmenter séparément ou ensemble une matière alumineuse et une matière carbonée, à réaliser un mélange intime avec un agent liant pour former un gâteau pâteux, à sécher, à granuler et à calciner le mélange, puis à le soumettre à une opération de chloration au moyen d'un courant gazeux contenant du chlore. Cependant la perméabilité du mélange au courant gazeux est faible, ce qui se traduit par un mauvais contact gaz/solide, l'existence de passages gazeux préférentiels et l'entraînement de poussières.

En outre l'une et l'autre des techniques mentionnées ci-dessus présentent un inconvénient rédhibitoire : Elles ne sont pas exploitables industriellement car la présence d'ions alcalins tels que sodium et potassium et d'ions alcalino-terreux tels que calcium et magnésium dans la matière alumineuse conduit à la formation de chloroaluminates à bas point de fusion, de l'ordre de 150 °C, qui, lors de l'opération de chloration, provoquent immanquablement la prise en masse du mélange.

Le procédé objet de l'invention ne présente pas les inconvénients énoncés ci-dessus. Il permet, industriellement et sans risque de prise en masse du mélange, d'obtenir un rendement en chlore R de l'opération de chloration supérieur à 80 % et pouvant dépasser 89 %, en l'absence de recyclage de la matière carbonée résiduelle. Il permet en outre de réaliser le recyclage de la matière carbonée résiduelle après l'avoir débarrassée, par lessivage à l'eau, des chloroaluminates alcalins et alcalino-terreux, qui se trouvent absorbés par ladite matière carbonée, et, ce faisant, d'augmenter de façon inattendue, toutes choses égales par ailleurs, le rendement en chlore R de l'opération de chloration de plus de 3 % en valeur absolue.

Selon le procédé de l'invention on réalise une opération de calcination d'un mélange de particules d'une matière alumineuse, de particules d'une matière carbonée et d'un agent liant, puis on réalise, sur le mélange calciné, une opération de chloration au moyen d'une composition gazeuse à base de chlore contenant de l'oxygène.

Selon le procédé de l'invention on règle les proportions en poids de matière alumineuse, de matière carbonée et d'agent liant dans le mélange de manière que le rapport pondéral carbone/oxydes après calcination soit compris entre 1 et 1,3 et avant calcination on amène le mélange sous forme d'agglomérés

de dimensions comprises entre 3 et 10 cm.

Selon une variante particulièrement avantageuse du procédé de l'invention on réalise une opération de recyclage de la matière carbonée résiduelle après lessivage à l'eau.

La demanderesse a en effet trouvé qu'en combinant l'emploi d'un agent liant, en mélange avec la matière alumineuse et la matière carbonée, et la confection d'agglomérés, de dimensions comprises entre 3 et 10 cm, à partir du mélange ainsi obtenu, et en réglant les proportions en poids de chacun des constituants du mélange de manière que le rapport pondéral carbone/oxydes après calcination soit compris entre 1 et 1,3, il est possible, industriellement et sans risque de prise en masse du mélange, d'obtenir un rendement en chlore R de l'opération de chloration supérieur à 80 % et pouvant dépasser 89 %, en l'absence de recyclage de la matière carbonée résiduelle. Elle a trouvé également qu'il est possible de débarrasser, par lessivage à l'eau, la matière carbonée résiduelle des chloroaluminates alcalins et alcalino-terreux, qui se trouvent absorbés par ladite matière carbonée, et de recycler ladite matière carbonée après lessivage à l'eau. Elle a trouvé également que le recyclage, après lessivage à l'eau, de ladite matière carbonée permet d'augmenter de façon inattendue, toutes choses égales par ailleurs, le rendement en chlore R de l'opération de chloration de plus de 3 % en valeur absolue.

Comme matières alumineuses pouvant être mises en oeuvre dans le procédé de l'invention on peut citer les argiles, les bauxites et les alumines. Le procédé de l'invention permet de mettre en oeuvre notamment l'alumine connue industriellement sous l'appellation de « alumine du procédé BAYER », bien qu'elle contienne de 0,4 à 0,8 % en poids des oxydes de sodium et de potassium.

Comme matières carbonées pouvant être mises en oeuvre dans le procédé de l'invention on peut citer la poudre de graphite, le coke de pétrole et le charbon de bois.

Pour une bonne mise en oeuvre du procédé de l'invention les particules de la matière alumineuse et de la matière carbonée ont un diamètre généralement compris entre 0 et 100 µm et de préférence entre 0 et 50 µm.

Comme agents liants pouvant être mis en oeuvre dans le procédé de l'invention on peut citer toute matière organique essentiellement hydrocarbonée de poids moléculaire élevé telle que, par exemple, brais, bitumes, goudrons de houilles, goudrons de pétroles, mélasses.

Les proportions de matière alumineuse, de matière carbonée et d'agent liant dans le mélange avant calcination sont généralement respectivement de 37 à 42, 37 à 42 et 10 à 15 parties en poids.

La composition gazeuse à base de chlore mise en oeuvre est telle que l'oxygène qu'elle contient représente généralement de 2 à 15 % et de préférence de 2 à 5 % en volume par rapport au chlore. L'oxygène a pour rôle de contribuer, par combustion de carbone, à maintenir la zone de réaction à la température de chloration choisie.

Le mélange de la matière alumineuse, de la matière carbonée et de l'agent liant est réalisé à température généralement comprise entre 100 et 150 °C.

La température de calcination est généralement comprise entre 700 et 1 000 °C. L'opération de calcination est poursuivie jusqu'à élimination pratiquement totale des hydrocarbures volatils apportés par l'agent liant.

La température de chloration est généralement comprise entre 700 et 900 °C et de préférence entre 770 et 830 °C.

Le mélange de la matière alumineuse, de la matière carbonée et de l'agent liant peut être réalisé dans un mélangeur à vitesse lente.

La confection des agglomérés à partir du mélange ainsi obtenu peut être effectuée au moyen d'un compacteur à deux roues mouleuses alvéolées tournant en sens inverse.

L'opération de calcination du mélange peut être réalisée dans un four à moufle ou avantageusement dans au moins deux fours à moufle fonctionnant en parallèle et par séquence. En régime permanent de fonctionnement on réalise par intermittence et successivement l'extraction, à une extrémité du four, de la fournée du mélange calciné, et, à l'autre extrémité du four, son remplacement par une fournée correspondante du mélange à calciner.

L'opération de chloration du mélange calciné est réalisée habituellement dans un réacteur comportant essentiellement une enceinte verticale garnie de céramique, munie d'un orifice supérieur de chargement du mélange calciné et d'un orifice inférieur d'extraction de la matière carbonée résiduelle. En régime permanent de fonctionnement l'extraction de la matière carbonée résiduelle hors du réacteur et le chargement subséquent du mélange calciné dans le réacteur sont effectués par intermittence, de préférence de manière périodique. L'extraction et le chargement portent à chaque intervention sur une quantité de matière représentant généralement respectivement de 10 à 15 % et de 15 à 20 % en poids de la charge totale permanente du réacteur. La composition gazeuse à base de chlore est introduite à la partie inférieure du réacteur et circule à contre-courant du mélange calciné. Le débit de chlore est généralement compris entre 130 et 230 $m^3$/h TPN et de préférence entre 150 et 200 $m^3$/h TPN par $m^2$ de section horizontale interne du réacteur. Par « TPN » on signifie que le volume du gaz considéré est rapporté aux conditions normales de température et de pression : 0°C et 101 325 Pa.

Les gaz issus du réacteur, qui contiennent de l'azote, de l'oxyde de carbone, du chlore, de l'acide chlorhydrique, du phosgène, du gaz carbonique, du chlorure d'aluminium et éventuellement du tétrachlorure de silicium et du tétrachlorure de titane, passent dans un condenseur dans lequel on recueille le chlorure d'aluminium à l'état solide.

Le chlorure d'aluminium est utilisable, à l'état solide, comme catalyseur des réactions d'alkylation des composés aromatiques.

On donne ci-après, à titre indicatif et non limitatif, plusieurs exemples de réalisation du procédé de l'invention.

Exemples 1 à 6

Dans un mélangeur à vitesse lente de 5 $m^3$ de capacité muni d'une double enveloppe portée à 120 °C par circulation de fluide de chauffage et d'un agitateur à bras horizontaux tournant a 20 tr/min on introduit :

- 1 500 kg de particules de matière alumineuse de 30 μm de diamètre moyen,
- 1 500 kg de particules de charbon de bois de 30 μm de diamètre moyen,
- 500 kg de brai.

Le mélange obtenu après une durée de 2 heures sert à la confection d'agglomérés de forme ovoïde de 8 cm de longueur, 6 cm de largeur et 4 cm d'épaisseur au moyen d'un compacteur à deux roues mouleuses alvéolées tournant en sens inverse.

Les agglomérés sont calcinés dans deux fours à moufle de 4 $m^3$ de volume utile portés à 850 °C, fonctionnant en parallèle et par séquence et alimentés chacun par fournée de 2000 kg.

Dans un réacteur comportant essentiellement une enceinte verticale de révolution garnie de céramique, de section horizontale interne de 1,5 m de diamètre et de 3 m de hauteur utile, munie d'un orifice supérieur et d'un orifice inférieur à ouverture automatique, préalablement portée à température de 800 °C par combustion, à l'intérieur, de charbon de bois en morceaux par un mélange d'air et d'oxygène, on introduit, par l'orifice supérieur, une première fournée de mélange calciné provenant d'un des fours à moufle. On commence l'introduction de chlore à débit réduit et progressivement croissant à travers quatre conduits indépendants dont les extrémités sont disposées radialement et diamétralement opposées deux à deux dans deux plans perpendiculaires et débouchent à 40 cm au-dessus du fond du réacteur. Après introduction de la première fournée de mélange calciné dans le réacteur on introduit, en 10 heures, cinq autres fournées de mélange calciné dans le réacteur, à raison d'une fournée toutes les 2 heures, et atteint ainsi la charge de régime du réacteur. On commence l'introduction d'oxygène en mélange avec le chlore. Après réglage du débit de chlore et du débit d'oxygène aux valeurs choisies de façon à maintenir la zone de réaction à la température de 800 °C, le réacteur se trouve en régime permanent de fonctionnement. On effectue alors toutes les 2 heures l'extraction de la matière carbonée résiduelle par l'orifice inférieur de l'enceinte suivie du chargement d'une fournée de mélange calciné par l'orifice supérieur de l'enceinte. Grâce à une légère dépression maintenue par aspiration à l'extrémité aval du circuit d'évacuation des gaz issus du réacteur, l'ouverture de l'orifice supérieur et celle de l'orifice inférieur du réacteur ne provoquent pas de fuite extérieure de gaz.

On fait passer les gaz issus du réacteur dans un condenseur dans lequel on recueille le chlorure d'aluminium à l'état solide.

Selon l'exemple considéré la matière alumineuse mise en oeuvre est de l'argile, de la bauxite ou de l'alumine du procédé BAYER. La composition en parties en poids de chaque matière alumineuse est la suivante :

| | |
|---|---|
| Argile | |
| Alumine | 42,0 |
| Oxyde de titane | 2,7 |
| Oxyde ferrique | 1,6 |
| Silice | 52,9 |
| Oxydes alcalins et alcalino-terreux | 0,8 |
| Bauxite | |
| Alumine | 84,9 |
| Oxyde de titane | 8,2 |
| Oxyde ferrique | 4,9 |
| Silice | 1,3 |
| Oxydes alcalins et alcalino-terreux | 0,7 |
| Alumine du procédé Bayer | |
| Alumine | 99,2 |
| Oxydes de sodium et de potassium | 0,8 |

Selon l'exemple considéré la matière carbonée résiduelle extraite toutes les 2 heures du réacteur n'est pas recyclée ou, après 40 heures de fonctionnement du réacteur, est recyclée dans le mélangeur, après lessivage à l'eau, en remplacement poids pour poids du charbon de bois.

Le tableau 1 ci-après indique pour chaque exemple, une fois atteint le régime permanent de fonctionnement :

- la nature de la matière alumineuse mise en oeuvre,
- le rapport pondéral carbone/oxydes déterminé sur un échantillon de mélange calciné,

- le débit de chlore et le débit d'oxygène de la composition gazeuse,
- la teneur volumique en chlore, acide chlorhydrique et phosgène des gaz issus du condenseur,
- la mise en oeuvre éventuelle du recyclage de la matière carbonée résiduelle,
- le rendement en chlore R de l'opération de chloration.

Tableau 1

| | EXEMPLES | | | | | |
|---|---|---|---|---|---|---|
| | 1 | 2 | 3 | 4 | 5 | 6 |
| Nature de la matière alumineuse | Argile | | Bauxite | | Alumine | |
| Mélange calciné | | | | | | |
| - Rapport carbone/oxydes | 1,15 | 1,17 | 1,16 | 1,18 | 1,18 | 1,16 |
| Composition gazeuse | | | | | | |
| - Débit de chlore ($m^3$/h TPN) | 325 | 325 | 300 | 300 | 303 | 303 |
| - Débit d'oxygène (m3/h TPN) | 12 | 12 | 11 | 11 | 11 | 11 |
| Gaz issus du condenseur | | | | | | |
| - Débit ($m^3$/h TPN) | 425 | 445 | 385 | 390 | 395 | 410 |
| - Teneur volumique (%) en : | | | | | | |
| . chlore | 2,97 | 1,95 | 2,28 | 0,89 | 1,82 | 0,95 |
| . acide chlorhydrique | 6,22 | 5,46 | 7,22 | 8,10 | 9,42 | 6,90 |
| . phosgène | 3,73 | 2,40 | 2,61 | 0,97 | 1,52 | 1,10 |
| Mise en oeuvre du recyclage de la matière carbonée résiduelle | Sans | Avec | Sans | Avec | Sans | Avec |
| Rendement en chlore R (%) | 87,2 | 90,3 | 89,1 | 92,3 | 89,5 | 92,6 |

**Revendications**

1. Procédé de préparation de chlorure d'aluminium, par carbochloration selon lequel on réalise une opération de calcination d'un mélange de particules d'une matière alumineuse, de particules d'une matière carbonée et d'un agent liant, puis réalise, sur le mélange calciné, une opération de chloration au moyen d'une composition gazeuse à base de chlore contenant de l'oxygène, caractérisé par le fait que l'on règle les proportions en poids de matière alumineuse, de matière carbonée et d'agent liant dans le mélange de manière que le rapport pondéral carbone/oxydes après calcination soit compris entre 1 et 1,3 et par le fait qu'avant calcination on amène le mélange sous forme d'agglomérés de dimensions comprises entre 3 et 10 cm.

2. Procédé selon la revendication 1, caractérisé par le fait que l'on réalise une opération de recyclage de la matière carbonée résiduelle après lessivage à l'eau.

3. Procédé selon l'une quelconque des revendications 1 et 2, caractérisé par le fait que la matière alumineuse est choisie dans le groupe formé par les argiles, les bauxites et les alumines.

4. Procédé selon l'une quelconque des revendications 1 à 3, caractérisé par le fait que la matière carbonée est choisie dans le groupe formé par la poudre de graphite, le coke de pétrole et le charbon de bois.

5. Procédé selon l'une quelconque des revendications 1 à 4, caractérisé par le fait que les particules de la matière alumineuse et de la matière carbonée ont un diamètre compris entre 0 et 100 µm et de préférence entre 0 et 50 µm.

6. Procédé selon l'une quelconque des revendications 1 à 5, caractérisé par le fait que l'agent liant est une matière organique essentiellement hydrocarbonée de poids moléculaire élevé.

7. Procédé selon la revendication 6, caractérisé par le fait que l'agent liant est choisi dans le groupe formé par les brais, les bitumes, les goudrons de houilles, les goudrons de pétroles, les mélasses.

8. Procédé selon l'une quelconque des revendications 1 à 7, caractérisé par le fait que les proportions de matière alumineuse, de matière carbonée et d'agent liant dans le mélange avant calcination sont respectivement de 37 à 42, 37 à 42 et 10 à 15 parties en poids.

9. Procédé selon l'une quelconque des revendications 1 à 8, caractérisé par le fait que la composition gazeuse à base de chlore est telle que l'oxygène qu'elle contient représente de 2 à 15 % et de préférence de 2 à 5 % en volume par rapport au chlore.

10. Procédé selon l'une quelconque des revendications 1 à 9, caractérisé par le fait que le mélange de la matière alumineuse, de la matière carbonée et de l'agent liant est réalisé à température comprise entre 100 et 150 °C.

11. Procédé selon l'une quelconque des revendications 1 à 10, caractérisé par le fait que la température de calcination est comprise entre 700 et 1 000 °C.

12. Procédé selon l'une quelconque des revendications 1 à 11, caractérisé par le fait que la température de chloration est comprise entre 700 et 900 °C et de préférence entre 770 et 830 °C.

13. Procédé selon l'une quelconque des revendications 1 à 12, caractérisé par le fait que le mélange de la matière alumineuse, de la matière carbonée et de l'agent liant est réalisé dans un mélangeur à vitesse lente.

14. Procédé selon l'une quelconque des revendications 1 à 13, caractérisé par le fait que la confection des agglomérés à partir du mélange obtenu est effectuée au moyen d'un compacteur à deux roues mouleuses alvéolées tournant en sens inverse.

15. Procédé selon l'une quelconque des revendications 1 à 14, caractérisé par le fait que l'opération de calcination du mélange est réalisée dans un four à moufle.

16. Procédé selon l'une quelconque des revendications 1 à 14, caractérisé par le fait que l'opération de calcination du mélange est réalisée dans au moins deux fours à moufle fonctionnant en parallèle et par séquence.

17. Procédé selon l'une quelconque des revendications 1 à 16, caractérisé par le fait que l'opération de chloration du mélange calciné est réalisée dans un réacteur comportant essentiellement une enceinte verticale garnie de céramique, munie d'un orifice supérieur de chargement du mélange calciné et d'un orifice inférieur d'extraction de la matière carbonée résiduelle.

18. Procédé selon la revendication 17, caractérisé par le fait qu'en régime permanent de fonctionnement l'extraction de la matière carbonée résiduelle hors du réacteur et le chargement subséquent du mélange calciné dans le réacteur sont effectués par intermittence, de préférence de manière périodique.

19. Procédé selon la revendication 18, caractérisé par le fait que l'extraction et le chargement portent à chaque intervention sur une quantité de matière représentant respectivement de 10 à 15 % et de 15 à 20 % en poids de la charge totale permanente du réacteur.

20. Procédé selon l'une quelconque des revendications 17 à 19, caractérisé par le fait que la composition gazeuse à base de chlore est introduite à la partie inférieure du réacteur et circule à contre-courant du mélange calciné.

21. Procédé selon l'une quelconque des revendications 17 à 20, caractérisé par le fait que le débit de chlore est compris entre 130 et 230 $m^3/h$ TPN et de préférence entre 150 et 200 $m^3/h$ TPN par $m^2$ de section horizontale interne du réacteur.

**Claims**

1. Process for the preparation of aluminium chloride by carbochlorination, according to which an operation of calcining a mixture of particles of a substance containing alumina, of particles of a carbonaceous substance and of a binding agent is carried out, and an operation of chlorination of the calcined mixture is then carried out using a gaseous composition based on chlorine containing oxygen, characterized in that the proportions by weight of substance containing alumina, of carbonaceous substance and of binding agent in the mixture is controlled so that the carbon/oxides weight ratio after calcination is between 1 and 1.3 and in that before calcination the mixture is made into the form of agglomerates between 3 and 10 cm in size.

2. Process according to Claim 1, characterized in that an operation of recycling the residual carbonaceous substance is carried out after washing with water.

3. Process according to either of Claims 1 and 2, characterized in that the substance containing alumina is chosen from the group consisting of clays, bauxites and aluminas.

4. Process according to any one of Claims 1 to 3, characterized in that the carbonaceous substance is chosen from the group consisting of graphite powder, petroleum coke and charcoal.

5. Process according to any one of Claims 1 to 4, characterized in that the particles of the substance containing alumina and, of the carbonaceous substance have a diameter of between 0 and 100 µm and preferably between 0 and 50 µm.

6. Process according to any one of Claims 1 to 5, characterized in that the binding agent is an essentially hydrocarbonaceous organic material of high molecular weight.

7. Process according to Claim 6, characterized in that the binding agent is chosen from the group consisting of pitches, bitumens, coal tars, petroleum tars and molasses.

8. Process according to any one of Claims 1 to 7, characterized in that the proportions of substance containing alumina, of carbonaceous substance and of binding agent in the mixture before calcination are 37 to 42, 37 to 42 and 10 to 15 parts by weight respectively.

9. Process according to any one of Claims 1 to 8, characterized in that the chlorine-based gaseous composition is such that the oxygen which it contains represents from 2 to 15 % and preferably from 2 to 5 % by volume relative to chlorine.

10. Process according to any one of Claims 1 to 9, characterized in that the mixture of the substance containing alumina, of the carbonaceous substance and of the binding agent is produced at a temperature of between 100 and 150 °C.

11. Process according to any one of Claims 1 to 10, characterized in that the calcination temperature is between 700 and 1,000 °C.

12. Process according to any one of Claims 1 to 11, characterized in that the chlorination temperature is between 700 and 1,000 °C and preferably between 770 and 830 °C.

13. Process according to any one of Claims 1 to 12, characterized in that the mixture of the substance containing alumina, of the carbonaceous substance and of the binding agent is produced in a slow-speed mixer.

14. Process according to any one of Claims 1 to 13, characterized in that the manufacture of the agglomerates from the mixture obtained is carried out by means of a compactor with two alveolate mill wheels rotating in opposite directions.

15. Process according to any one of Claims 1 to 14, characterized in that the operation of calcining the mixture is carried out in a muffle furnace.

16. Process according to any one of Claims 1 to 14, characterized in that the operation of calcining the mixture is carried out in at least two muffle furnaces operating in parallel and sequentially.

17. Process according to any one of Claims 1 to 16, characterized in that the operation of chlorinating the calcined mixture is carried out in a reactor essentially comprising a vertical enclosure packed with ceramic, equipped with an upper orifice for charging the calcined mixture and a lower orifice for withdrawing the residual carbonaceous substance.

18. Process according to Claim 17, characterized in that in a continuous operating regime the withdrawal of the residual carbonaceous substance from the reactor and the subsequent charging of the calcined mixture into the reactor are performed intermittently, preferably in a periodic manner.

19. Process according to Claim 18, characterized in that the withdrawal and the charging on each occasion involve a quantity of substance representing from 10 to 15 % and from 15 to 20 % by weight respectively of the total permanent reactor charge.

20. Process according to any one of Claims 17 to 19, characterized in that the chlorine-based gaseous composition is introduced into the lower part of the reactor and circulates countercurrentwise to the calcined mixture.

21. Process according to any one of Claims 17 to 20, characterized in that the flow rate of chlorine is between 130 and 230 $m^3/h$ STP and preferably between 150 and 200 $m^3/h$ STP per $m^2$ of internal horizontal cross-section of the reactor.

**Patentansprüche**

1. Verfahren zur Herstellung von Aluminiumchlorid durch Carbochlorierung, bei dem eine Mischung von Teilchen einer tonerdehaltigen Substanz, Teilchen einer kohlenstoffhaltigen Substanz und einem Bindemittel kalziniert und dann die kalzinierte Mischung mittels eines sauerstoffhaltigen Gasgemisches auf Basis von Chlor chloriert wird, dadurch gekennzeichnet, daß man die Gewichtsverhältnisse zwischen der tonerdehaltigen Substanz, der kohlenstoffhaltigen Substanz und dem Bindemittel in der Mischung so reguliert, daß das Gewichtsverhältnis Kohlenstoff/Oxide nach der Kalzination zwischen 1 und 1,3 liegt, und daß man die Mischung vor der Kalzination in Form von Preßlingen mit Abmessungen zwischen 3 und 10 cm zuführt.

2. Verfahren nach Anspruch 1, dadurch gekennzeichnet, daß die verbleibende kohlenstoffhaltige Substanz nach Auswaschen mit Wasser wiederverwendet wird.

3. Verfahren nach irgendeinem der Ansprüche 1 und 2, dadurch gekennzeichnet, daß die tonerdehaltige Substanz aus der Gruppe der Tone, Bauxite und Aluminiumoxide gewählt wird.

4. Verfahren nach irgendeinem der Ansprüche 1 bis 3, dadurch gekennzeichnet, daß die kohlenstoffhaltige Substanz aus der Gruppe von Graphitpulver, Petrolkoks und Holzkohle gewählt wird.

5. Verfahren nach irgendeinem der Ansprüche 1 bis 4, dadurch gekennzeichnet, daß die Teilchen der

tonerdehaltigen Substanz und der kohlenstoffhaltigen Substanz einen Durchmesser zwischen 0 und 100 µm und vorzugsweise zwischen 0 und 50 µm aufweisen.

6. Verfahren nach irgendeinem der Ansprüche 1 bis 5, dadurch gekennzeichnet, daß das Bindemittel eine im wesentlichen kohlenwasserstoffhaltige, organische Substanz mit hohem Molekulargewicht ist.

7. Verfahren nach Anspruch 6, dadurch gekennzeichnet, daß das Bindemittel aus der Gruppe der Peche, Bitumina, Steinkohlenteere, Petrolteere und Melassen gewählt wird.

8. Verfahren nach irgendeinem der Ansprüche 1 bis 7, dadurch gekennzeichnet, daß die Anteile der tonerdehaltigen, der kohlenstoffhaltigen Substanz und des Bindemittels in der Mischung vor der Kalzinierung jeweils 37 bis 42, 37 bis 42 und 10 bis 15 Gewichtsteile betragen.

9. Verfahren nach irgendeinem der Ansprüche 1 bis 8, dadurch gekennzeichnet, daß das Gasgemisch auf Basis von Chlor 2 bis 15 und vorzugsweise 2 bis 5 Volumenprozent Sauerstoff bezogen auf Chlor enthält.

10. Verfahren nach irgendeinem der Ansprüche 1 bis 9, dadurch gekennzeichnet, daß das Vermischen der tonerdehaltigen, der kohlenstoffhaltigen Substanz und des Bindemittels bei einer Temperatur zwischen 100 und 150 °C durchgeführt wird.

11. Verfahren nach irgendeinem der Ansprüche 1 bis 10, dadurch gekennzeichnet, daß die Temperatur der Kalzination zwischen 700 und 1 000 °C liegt.

12. Verfahren nach irgendeinem der Ansprüche 1 bis 11, dadurch gekennzeichnet, daß die Temperatur der Chlorierung zwischen 700 und 900 °C und vorzugsweise zwischen 770 und 830 °C liegt.

13. Verfahren nach irgendeinem der Ansprüche 1 bis 12, dadurch gekennzeichnet, daß das Vermischen der tonerdehaltigen Substanz, der kohlenstoffhaltigen Substanz und des Bindemittels in einem Mischer mit geringer Geschwindigkeit durchgeführt wird.

14. Verfahren nach irgendeinem der Ansprüche 1 bis 13, dadurch gekennzeichnet, daß die Herstellung der Preßlinge aus der erhaltenen Mischung mittels einer Presse mit zwei gegenläufigen Formrädern mit Zellen erfolgt.

15. Verfahren nach irgendeinem der Ansprüche 1 bis 14, dadurch gekennzeichnet, daß die Kalzination der Mischung in einem Muffelofen erfolgt.

16. Verfahren nach irgendeinem der Ansprüche 1 bis 14, dadurch gekennzeichnet, daß die Kalzination der Mischung in mindestens zwei parallel und abwechselnd arbeitenden Muffelöfen erfolgt.

17. Verfahren nach irgendeinem der Ansprüche 1 bis 16, dadurch gekennzeichnet, daß die Chlorierung der kalzinierten Mischung in einem Reaktor durchgeführt wird, der im wesentlichen aus einer vertikalen, mit Keramik ausgekleideten Kammer besteht, die eine obere Öffnung zum Beladen mit kalzinierter Mischung und eine untere Öffnung zur Entnahme der verbleibenden kohlenstoffhaltigen Substanz aufweist.

18. Verfahren nach Anspruch 17, dadurch gekennzeichnet, daß im Dauerbetrieb die Entnahme der übrigbleibenden kohlenstoffhaltigen Substanz aus dem Reaktor und die darauffolgende Beschickung des Reaktors mit der kalzinierten Mischung diskontinuierlich und vorzugsweise periodisch erfolgt.

19. Verfahren nach Anspruch 18, dadurch gekennzeichnet, daß die Entnahme und die Beschickung bei jedem Eingriff 10 bis 15 bzw. 15 bis 20 Gewichtsprozent der permanenten Gesamtladung des Reaktors ausmachen.

20. Verfahren nach irgendeinem der Ansprüche 17 bis 19, dadurch gekennzeichnet, daß das Gasgemisch auf Basis von Chlor im unteren Teil des Reaktors eingeleitet wird und im Gegenstrom zur kalzinierten Mischung zirkuliert.

21. Verfahren nach irgendeinem der Ansprüche 17 bis 20, dadurch gekennzeichnet, daß die Durchflußmenge des Chlors zwischen 130 und 230 $m^3/h$ und vorzugsweise zwischen 150 und 200 $m^3/h$ unter Normalbedingungen pro Quadratmeter des horizontalen Innenquerschnitts des Reaktors beträgt.